# EUROPEAN PATENT APPLICATION

(11) **EP 3 290 241 A1**
(43) Date of publication of application: **07.03.2018**
(21) Application number: 15890856.6
(22) Date of filing: 24.11.2015
(51) Int. Cl.: B60G 7/02, B60G 7/00, B60G 7/04, F16D 3/22

(54) **HYBRID LOWER ARM**

(30) Priority: 29.04.2015 KR 20150060781
(71) Applicant: Iljin Co., Ltd., Gyeongju-si, Gyeongsangbuk-do 38073 (KR)
(72) Inventor: KWON, Tae-Sung, Gyeongju-si Gyeongsangbuk-do 38051 (KR); LEE, Sung-Geun, Seoul 08296 (KR); YU, Byong Suk, Gyeongju-si Gyeongsangbuk-do 38107 (KR); JEONG, Se Woong, Ulsan 44750 (KR); KIM, Hyun-Woo, Seoul 01606 (KR); KWON, Hyuk, Seoul 05409 (KR); KWON, Ig-Jin, Gyeongju-si Gyeongsangbuk-do 38051 (KR); YOON, Young In, Ulju-gun Ulsan 44923 (KR); PARK, Min Kook, Daegu 41911 (KR); KWON, Soon Chan, Gimcheon-si Gyeongsangbuk-do 39664 (KR)
(74) Representative: Prinz & Partner mbB
(86) International application number: PCT/KR2015/012626
(87) International publication number: WO 2016/175415

(57) **Abstract**

The present disclosure relates to a hybrid lower arm including: a metal member including a plurality of end portions, one end portion of the plurality of end portions being connected to a ball joint and another end portion of the plurality of end portions being connected to a vehicular body; a face portion extending downwards along an edge of the metal member between the one end portion and the another end portion; and a guard member configured to surround a portion of the face portion and formed of a material lighter than the metal member.

## Description

### TECHNICAL FIELD

The present disclosure relates to a hybrid lower arm and, more particularly, to a hybrid lower arm having a guard member at one surface thereof to prevent painted surfaces from being damaged due to chipping while a vehicle is being driven.

### BACKGROUND

A vehicular suspension system is generally referred to as a suspension, and is an apparatus for connecting a wheel to a vehicular body. The vehicular suspension system consists of a spring that adjusts transmission of an impact from a road surface to the vehicular body, a shock absorber that absorbs the impact from the road surface together with the spring, an arm or a link that controls an operation of the wheel, and a stabilizer that prevents rolling of the vehicle.

The aforementioned vehicular suspension system is an important apparatus for promoting ride comfort and driving stability, and mainly performs the functions of suppressing or rapidly reducing vibrations transmitted from the vehicular wheel while supporting the vehicular body from the vehicular wheel in a stable manner.

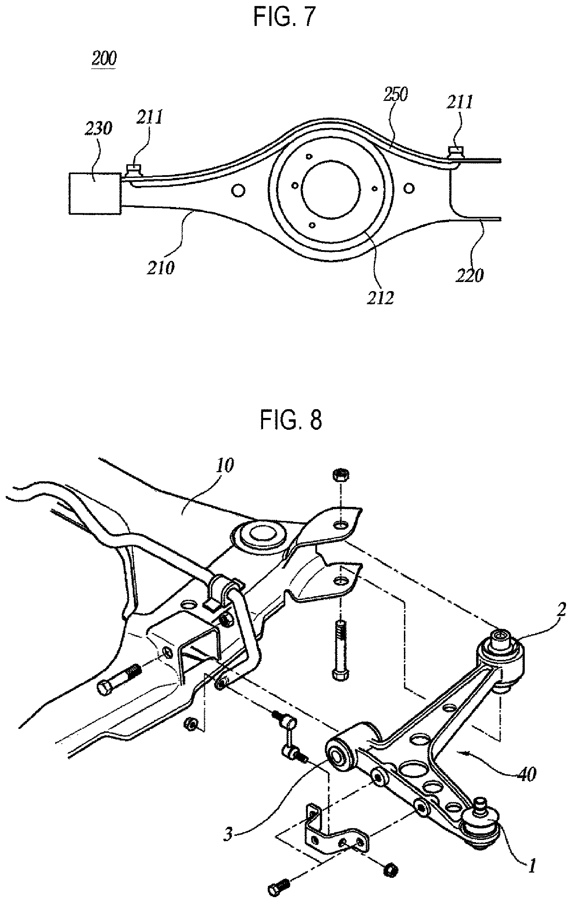

In such a suspension system, a lower arm 40 is used to perform the functions of connecting a vehicular wheel to a vehicular body and supporting the vehicular wheel. As shown in FIG. 8, such a lower arm 40 is provided with a damping joint 2, a vehicular body mounting bush 3, and a ball joint 1 at respective end portions thereof, to thereby mount the vehicular wheel to the vehicular body.

That is, the lower arm 40 includes three end portions. One end portion of the three end portions is coupled to a knuckle of the vehicular wheel via the ball joint 1 and supports the vehicular wheel together with an upper arm. The other end portions of the three end portions are coupled to a frame 10 of the vehicular body via the damping joint 2 and the vehicular body mounting bush 3.

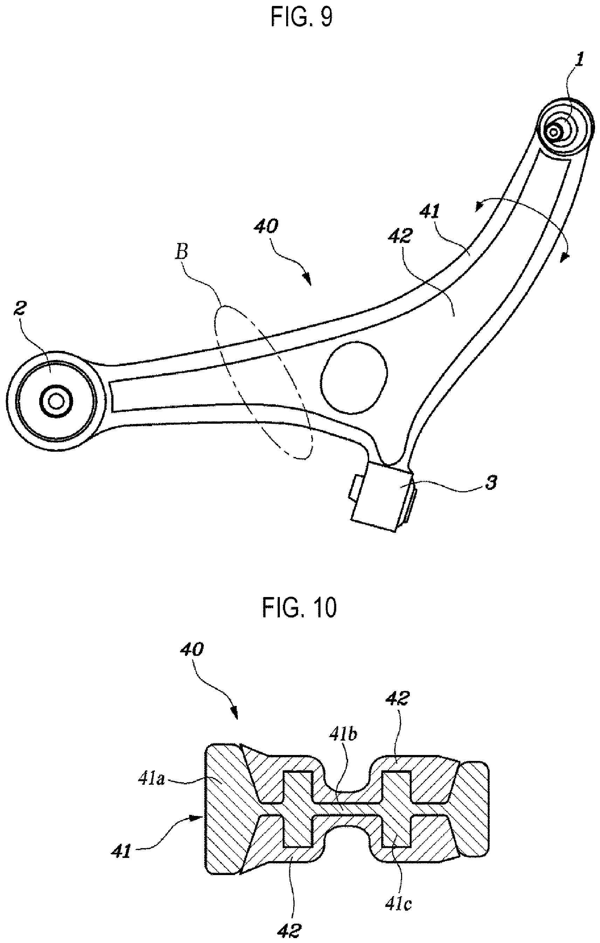

FIG. 9 is a front perspective view of a lower arm according to a prior art technology, and FIG. 10 is a sectional view of part B in FIG. 9. As shown in FIGS. 9 and 10, the lower arm 40 of prior art consists of a main member 41 made of a metal material, and a covering member 42 mounted on one surface of the main member 41.

Referring to FIG. 10, the main member 41 largely consists of a base portion 41 a, a connection portion 41 b, and a plurality of pin portions 41 c. The covering member 42 is coupled to upper and lower surfaces of the connection portion 41 b and the pin portions 41 c.

As such, the lower arm 40 of prior art is configured such that separate covering members are not provided at an outer surface and upper and lower surfaces of the base portion 41 a. Thus, there have been problems in that corrosion or aging occurs in the lower arm 40 when painted surfaces are damaged due to chipping which occurs while the vehicle is being driven.

### SUMMARY

Therefore, the present disclosure has been devised to solve the aforementioned problems, and the object of the present disclosure is to provide a hybrid lower arm which includes a guard member at one face portion of the lower arm so as to prevent damage of painted surfaces.

A hybrid lower arm according to an embodiment of the present disclosure may include a metal member, a face portion, and a guard member. The metal member may include a plurality of end portions. One end portion of the plurality of end portions may be connected to a ball joint and another end portion of the plurality of end portions may be connected to a vehicular body. The face portion may be formed so as to extend downwards along an edge of the metal member between the one end portion and the another end portion. Further, the guard member may be configured to surround a portion of the face portion, and may be formed of a material lighter than the metal member.

A lower end of the face portion may be bent toward an inner side of the metal member.

The guard member may be formed of a plastic material, and may be configured to surround an inward surface, an outward surface and a lower end surface of the face portion.

The metal member may include a body portion formed in a shape of an L-shaped plate. The guard member may be formed so as to surround a lower surface of the body portion, an inward surface of the face portion and an outward surface of the face portion. The guard member may be formed with a plurality of partition walls which extend downwards from the lower surface of the body portion to support the face portion and are connected to the face portion.

The metal member may be formed with three end portions.

A ball joint hole may be formed at one end portion of the three end portions, a first bush connection hole may be formed at another end portion of the three end portions, a second bush connection portion may be formed at the other end portion of the three end portions, and a center hole may be formed among the three end portions.

The guard member may be formed of a plastic material and is formed to surround an outward surface of the face portion formed in a vertical direction between the ball joint hole and the first bush connection portion, and to surround a bent portion of the body portion.

According to the above-described embodiments of the present disclosure, since the hybrid lower arm is configured with the guard member, it is possible to prevent painted surfaces from being damaged due to chipping. Therefore, it is possible to prevent corrosion or damage occurring in the hybrid lower arm and improve durability of the hybrid lower arm.

### BRIEF DESCRIPTION OF THE DRAWINGS

FIG. 1 is a front perspective view of a hybrid lower arm according to an embodiment of the present disclosure.
FIG. 2 is a sectional view of part A in FIG. 1.
FIG. 3 is a partially cut-away perspective view of a hybrid lower arm according to an embodiment of the present disclosure.
FIG. 4 is a perspective view showing a metal member of a hybrid lower arm according to an embodiment of the present disclosure.
FIG. 5 is a perspective view showing a guard member of a hybrid lower arm according to an embodiment of the present disclosure.
FIG. 6 is a rear perspective view of a hybrid lower arm according to an embodiment of the present disclosure.
FIG. 7 is a top view of a hybrid lower arm provided at a rear wheel according to another embodiment of the present disclosure.
FIG. 8 is an exploded perspective view showing a mounting state of a lower arm according to a prior art technology.
FIG. 9 is a front perspective view of a lower arm according to a prior art technology.
FIG. 10 is a sectional view of part B in FIG. 9.

### DETAILED DESCRIPTION

Hereinafter, detailed descriptions are made as to preferred embodiments of the present disclosure with reference to the accompanying drawings.

Throughout the entire specification, a part may be described as "including" a certain constituent element. This means, unless specifically described otherwise, that such a part does not exclude other constituent elements, but may further include other constituent elements.

Throughout the entire specification, parts denoted by the same reference numerals mean the same or similar constituent elements.

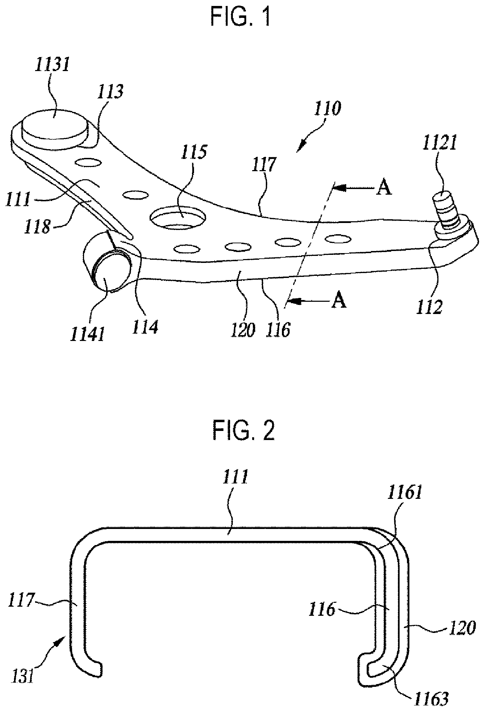

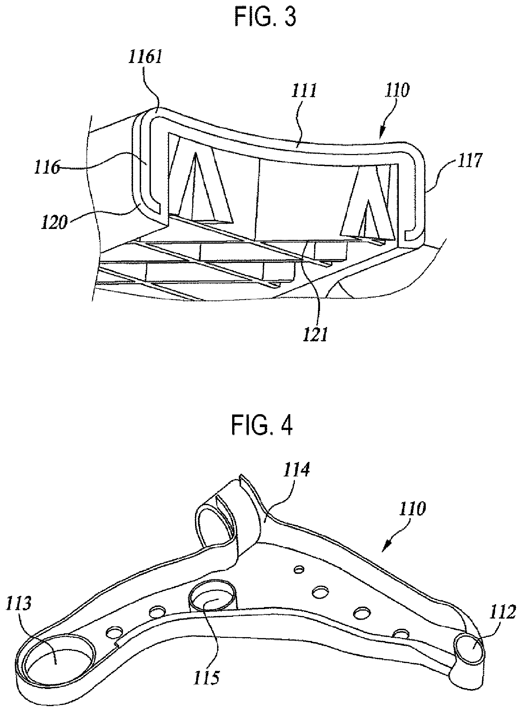

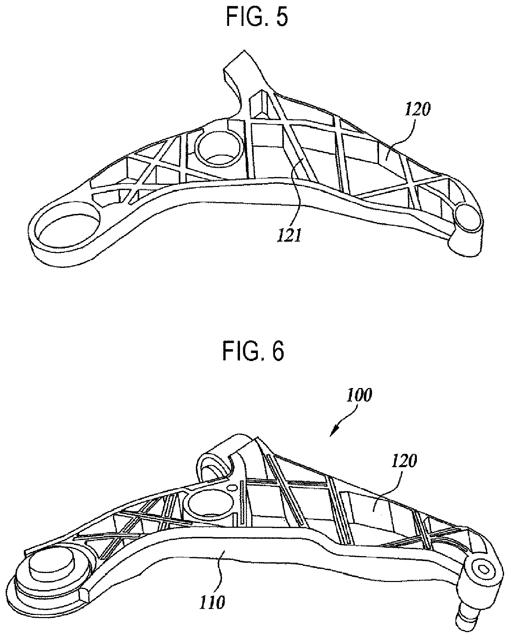

FIG. 1 is a front perspective view of a hybrid lower arm according to an embodiment of the present disclosure. FIG. 2 is a sectional view of part A in FIG. 1. FIG. 3 is a partially cut-away perspective view of a hybrid lower arm according to an embodiment of the present disclosure. FIG. 4 is a perspective view showing a metal member of a hybrid lower arm according to an embodiment of the present disclosure. FIG. 5 is a perspective view showing a guard member of a hybrid lower arm according to an embodiment of the present disclosure. FIG. 6 is a rear perspective view of a hybrid lower arm according to an embodiment of the present disclosure.

For ease of explanation, a left side in a drawing is referred to as "one side," "one end," "one end portion" or a name similar thereto, and a right side in a drawing is referred to as an "opposite side," an "opposite end," an "opposite end portion," or a name similar thereto.

Referring to FIGS. 1 and 2, a hybrid lower arm 100 according to an embodiment of the present disclosure is formed in an approximately L-like shape, and includes a metal member 110 and a guard member 120.

The metal member 110 is formed of a steel or aluminum material, and includes a body portion 111 and a face portion 131.

The body portion 111 is formed in an approximately plate shape, and edges of the body portion 111 are bent in a vertical direction of the drawing. The body portion 111 may be formed with three end portions. A ball joint hole 112 is formed at one end portion of the three end portions, a first bush connection hole 113 is formed at another end portion of the three end portions, and a second bush connection portion 114 is formed at the other end portion of the three end portions. Further, a center hole 115 is formed at a center of the body portion 111 among the three end portions. A first bent portion 1161 is formed at the edge of the body portion 111. The face portion 131 extends along the first bent portion 1161 toward a lower side of the drawing.

As described above, the body portion 111 is formed with the ball joint hole 112, the first bush connection hole 113, the second bush connection portion 114, and the center hole 115.

The ball joint hole 112 is formed so as to perforate in the vertical direction at the one end portion of the body portion 111. A ball joint 1121 may be fixedly provided at the ball joint hole 112 and may connect with a vehicular wheel.

The first bush connection hole 113 is formed so as to perforate in the vertical direction at the another end portion of the body portion 111. A first bush 1131 is provided at the first bush connection hole 113. The first bush 1131 is coupled to a vehicular body.

The second bush connection portion 114 protrudes from a side surface of the other end portion of the body portion 111. The second bush connection portion 114 has a hollow cylindrical shape, and a second bush 1141 is provided at an inner side of the second bush connection portion.

The center hole 115 is formed among the ball joint hole 112, the first bush connection hole 113, and the second bush connection portion 114. The center hole 115 is formed to perforate in the vertical direction. A shock absorber is connected through the center hole 115.

The face portion 131 is formed so as to be bent in the vertical direction at the edge of the body portion 111. The face portion 131 includes a first face portion 116, a second face portion 117, and a third face portion 118. The first, second, and third face portions 116, 117, and 118 may be formed as a single integral portion and may constitute a side surface of the body portion 111.

Hereinafter, a downward direction of the body portion 111 and a direction toward a portion surrounded by the first, second, and third face portions 116, 117, and 118 are referred to as "inward," while a direction opposite to the inward direction is referred to as "outward."

The first face portion 116 is formed so as to extend from the edge of the body portion 111 toward the lower side of the drawing between the ball joint hole 112 and the second bush connection portion 114. A second bent portion 1163 is bent inward at a lower end of the first face portion 116.

The second face portion 117 extends downwards from the edge of the body portion 111 between the ball joint hole 112 and the first bush connection hole 113. The second face portion 117 is formed to bend arcuately. The second bent portion 1163 is bent inward at a lower end of the second face portion 117.

The third face portion 118 is formed so as to extend downwards from the edge of the body portion 111 between the first bush connection hole 113 and the second bush connection portion 114.

An inward surface of the second face portion 117 is configured to face respective inward surfaces of the first face portion 116 and the third face portion 118.

The guard member 120 is formed of a plastic material by insert injection molding together with the metal member 110. For example, the guard member 120 may be formed of Glass Fiber Reinforced Plastic (GFRP).

According to an embodiment of the present disclosure, as shown in FIG. 2, the guard member 120 is configured to surround the first face portion 116 of the metal member 110. That is, the guard member 120 may be configured to surround the first bent portion 1161, the first face portion 116, and the second bent portion 1163. Since the second bent portion 1163 is bent inward as described above, the guard member 120 is more firmly coupled to the metal member 110.

The guard member 120 surrounding the first bent portion 1161 is configured such that a height of the guard member 120 is aligned with an outer surface of the body portion 111 in the vertical direction. The guard member 120 is configured to cover the inner surface and the outer surface of the first bent portion 1161, but does not extend to an upper surface and an outer surface of the body portion 111. Accordingly, when compared with a guard member covering the entire surface of the body portion 111, the guard member 120 can reduce the production cost or weight. Further, since the guard member 120 extends up to the bent portion, the guard member 120 is firmly mounted to the metal member 110 and demounting of the guard member is not easily facilitated.

Further, referring to FIGS. 3 to 6, the guard member 120 may be provided not only at the first face portion 116, but also at the inner side of the metal member 110. The guard member 120 may be configured in a shape of surround the face portion 131 of the metal member 110 and the inner surface of the body portion 111. That is, the guard member 120 may be provided so as to surround all of the inward surfaces, the lower surfaces, and the outward surfaces of the face portions 116, 117, and 118.

A partition wall 121, which extends in the vertical direction in the same direction as the extension direction of the face portion 131, may be provided at an inner side of the guard member 120. Both sides of the partition wall 121 are coupled to the inward surface of the face portion 131. For example, where one side of the partition wall 121 is coupled to the first face portion 116, the opposite side of the partition wall 121 is coupled to the second face portion 117 or the third face portion 118.

The partition wall 121 may be formed of a plurality of partition walls, and the respective partition walls 121 may be configured to intersect with each other.

As described above, since the plurality of the partition walls 121 are formed with the above-described structure and support the face portion 131 of the metal member 110, the face portion 131 can be prevented from being damaged by an external impact. In particular, when an impact is applied from a front side due to a chipping phenomenon while the vehicle is being driven, the first face portion 116 of the guard member 110 can be prevented from cracking or being damaged.

The guard member 120 is formed of a material different from the metal member 110. When the guard member 120 is formed of a material different from the metal member 110, a volume ratio of the metal member 110 is set in a range of 10% or more and less than 99%.

Since the metal member 110 and the guard member 120 are formed of different materials, the hybrid lower arm 100 according to an embodiment of the present disclosure has an effect of reduced weight when compared with a case where the metal member and the guard member are made of a single material. Further, since the lower end of the face portion 131 of the metal member 110 is bent inward, the metal member 110 and the guard member 120 can be prevented from being separated from each other.

FIG. 7 is a top view of a hybrid lower arm provided at a rear wheel according to another embodiment. In FIG. 7, a transverse direction of the drawing is referred to as a "length direction," a longitudinal direction of the drawing is referred to as a "width direction," and a direction perpendicular to the paper surface of the drawing is referred to as a "vertical direction."

As shown in FIG. 7, a hybrid lower arm 200 according to another embodiment of the present disclosure is provided at a rear wheel of a vehicle, and includes a body portion 210, a first coupling portion 220, and a second coupling portion 230.

The body portion 210 may be formed of a steel or aluminum material. The body portion 210 is formed in a shape of a plate extending in the length direction. The body portion 210 is formed in a shape of a gourd bottle. Similar to the above-described first embodiment, edges of the body portion 210 are formed to bend in the vertical direction.

A spring seat hole, which is opened in the vertical direction, is formed at a center of the body portion 210, and a hollow cylindrical spring seat 212 is mounted at an inner side of the spring seat hole.

Further, the first coupling portion 220 and the second coupling portion 230 are formed at two ends of the body portion 210 in the length direction.

The first coupling portion 220 is formed to extend from one side of the body portion 210, and is formed in a shape of a hollow body opened in the width direction. A bush is provided at an inner side of the first coupling portion 220.

The second coupling portion 230 is formed at the opposite side of the body portion 210, and extends from a surface which is formed when the edge of the body portion 210 is bent in the vertical direction. The second coupling portion 230 is formed with a hole perforating in the width direction.

According to another embodiment of the present disclosure, a guard member 250 is provided at the body portion 210. The guard member 250 may be configured to surround a portion or the entirety of the faces which are bent from the body portion 210 in the vertical direction. Accordingly, it is possible to prevent corrosion or damage caused by an external impact on the faces of the body portion 210.

## Claims

1. A hybrid lower arm comprising:
a metal member including a plurality of end portions, one end portion of the plurality of end portions being connected to a ball joint and another end portion of the plurality of end portions being connected to a vehicular body;
a face portion extending downwards along an edge of the metal member between the one end portion and the another end portion; and
a guard member configured to surround a portion of the face portion and formed of a material lighter than the metal member.

2. The hybrid lower arm of Claim 1, wherein a lower end of the face portion is bent toward an inner side of the metal member.

3. The hybrid lower arm of Claim 2, wherein the guard member is formed of a plastic material and is configured to surround an inward surface, an outward surface, and a lower end surface of the face portion.

4. The hybrid lower arm of Claim 1, wherein the metal member includes a body portion formed in a shape of an L-shaped plate,
wherein the guard member is formed to surround a lower surface of the body portion, an inward surface of the face portion, and an outward surface of the face portion, and
wherein the guard member is formed with a plurality of partition walls which extend downwards from the lower surface of the body portion to support the face portion and are connected to the face portion.

5. The hybrid lower arm of Claim 4, wherein the metal member is formed with three end portions,
wherein a ball joint hole is formed at one end portion of the three end portions, a first bush connection hole is formed at another end portion of the three end portions, a second bush connection portion is formed at the other end portion of the three end portions, and a center hole is formed among the three end portions, and
wherein the guard member is formed of a plastic material and is formed to surround an outward surface of the face portion formed in a vertical direction between the ball joint hole and the first bush connection portion, and to surround a bent portion of the body portion.
